# FASCICULE DE BREVET EUROPEEN

(11) **EP 1 613 513 B1**
(45) Date de publication et mention de la délivrance du brevet: **11.02.2009**
(21) Numéro de dépôt: 04742516.0
(22) Date de dépôt: 15.04.2004
(51) Int. Cl.: B60R 21/26, C06D 5/06

(54) **DISPOSITIF DE MISE EN OEUVRE D'UN ELEMENT DE SECURITE POUR LA PROTECTION DES BIENS ET/OU DES PERSONNES**
VORRICHTUNG ZUR VERWENDUNG EINES SICHERHEITSELEMENTS ZUM SCHUTZ VON WAREN UND/ODER MENSCHEN
DEVICE FOR USING A SAFETY ELEMENT FOR THE PROTECTION OF GOODS AND/OR PEOPLE

(30) Priorité: 15.04.2003 FR 0350107
(43) Date de publication de la demande: 11.01.2006
(73) Titulaire: SEVA TECHNOLOGIES, 75020 Paris (FR); Lacroix, Etienne, 31607 Muret (FR)
(72) Inventeur: CORD, Paul-Philippe, F-75009 Paris (US); DESBLEUMORTIERS, Virginie, F-94310 Orly (FR); BOYER, Fabrice, 44450 Saint Julien de Concelles (FR); NIEHAUS, Michael, D-76297 Stutensee (DE)
(74) Mandataire: Breese, Pierre
(86) Numéro de dépôt international: PCT/FR2004/000935
(87) Numéro de publication internationale: WO 2004/091981

(56) Documents cités:
- EP-A- 0 116 795
- EP-A- 0 816 307
- WO-A-01/89885
- US-A- 6 149 193
- US-A1- 2003 051 630

## Description

La présente invention se rapporte au domaine des dispositifs du type comportant un système de génération de gaz pour la mise en oeuvre, en particulier, d'un élément de sécurité, pour la protection de biens et/ou de personnes.

La présente invention se rapporte plus particulièrement à un dispositif de mise en oeuvre d'un élément de sécurité notamment pour la protection d'au moins un occupant d'un véhicule, du type comportant un système de génération de gaz raccordé audit élément de sécurité, par exemple à un coussin gonflable de sécurité et comportant une charge explosible formée au moins par un composé pyrotechnique primaire et un composé secondaire.

L'art antérieur connaît déjà la demande de brevet WO 0189885, déposée au nom de la demanderesse, qui décrit un dispositif de mise en oeuvre d'un élément, en particulier de sécurité, pour la protection de biens et/ou de personnes et notamment pour la protection d'au moins un occupant d'un véhicule, du type comportant un système de génération de gaz raccordé audit élément de sécurité, par exemple à un coussin gonflable de sécurité, et comportant une charge explosible formée au moins par un composé pyrotechnique primaire et un composé secondaire. Dans ce système, le composé pyrotechnique primaire est destiné à piloter la décomposition d'un composé secondaire et permet au moins une interaction des produits de combustion des composés primaire(s) et secondaire(s) dans au moins un volume d'interaction non confiné ou faiblement confiné, dudit système de génération de gaz, ladite interaction pouvant être en particulier au moins partiellement une réaction d'oxydoréduction.

Un système de génération de gaz selon cette demande de brevet WO 0189885 se distingue d'autres systèmes connus, comme par exemple un générateur simple effet tel que celui décrit dans le brevet US 2003/0051630 ou un générateur double effet tel que celui décrit dans le brevet US 6149193, notamment par le fait que la décomposition d'un composé secondaire est pilotée par un composé primaire.

La composition envisagée dans cette demande de brevet donne satisfaction, mais ce dispositif présente l'inconvénient principal de dégager un taux assez important d'oxydes d'azote. Par ailleurs, cette composition, ou une composition de ce type, engendre la formation de beaucoup d'eau qui est préjudiciable au rendement gazeux après recondensation. En outre, cette composition nécessite la consommation de tout l'oxygène présent dans le nitrate d'ammonium, ce qui oblige à inclure dans la composition au moins 40% de propergol.

La présente invention entend remédier à ces inconvénients en proposant une composition particulière pour un dispositif du type comportant un système de génération de gaz en particulier pour la mise en oeuvre d'un élément de sécurité présentant une composition particulière pour le secondaire de sorte que, de manière surprenante, les émissions de l'oxyde d'azote sont réduites drastiquement, sans que pour autant des particules solides soient émises et en garantissant un dégagement de monoxyde de carbone faible.

Cette composition particulière pour le composant secondaire permet en outre de diminuer le pourcentage de propergol et limite la quantité d'eau formée.

Pour ce faire, la présente invention propose à cet effet un dispositif avec les caractéristiques de la revendication 1.

De préférence, les susdits composés primaire et secondaire se présenteront sous forme solide.

Ainsi, selon une possibilité offerte par l'invention, les composés primaire et secondaire formeront une charge explosible monolithe homogène.

Selon une autre possibilité offerte par l'invention, les composés primaire et secondaire forment une charge explosible monolithe hétérogène et en ce que lesdits composés primaire et secondaire se présentent en vrac, pastillé ou non, ou sous la forme d'au moins une feuille, plate ou enroulée, ou d'au moins un brin.

Avantageusement, le composé secondaire sera placé dans une chambre, ladite chambre présentant une pression efficace (intégrale P=ƒf(t)/t) inférieure à 50 bars lors de la combustion du composé secondaire ; ladite pression étant obtenue par ajustement du diamètre d'une tuyère de la chambre secondaire.

Avantageusement, selon un premier mode d'exécution de l'invention, le composé secondaire sera placé dans une chambre, ladite chambre présentant une pression d'au moins 50 bars lors de la combustion du composé secondaire ; ladite pression étant obtenue par ajustement du diamètre de la chambre secondaire.

Avantageusement, selon un second mode d'exécution de l'invention, le composé secondaire, placé dans la chambre secondaire, présentera une pression inférieure ou égale à la pression de combustion du propergol ; ladite pression étant obtenue par ajustement du diamètre de la chambre secondaire.

Il est important de noter ici que l'homme du métier est parfaitement à même de réaliser les pressions envisagées ci-dessus dans les deux susdites chambres simplement en faisant varier le diamètre de la tuyère, selon des tables de variation de pression en fonction de l'ouverture de la tuyère. Ainsi, l'indication d'une mesure de pression pour chacune des chambres est le meilleur moyen de définition pour la structure du dispositif, c'est-à-dire du diamètre de sa tuyère.

Avantageusement, l'additif réducteur sera un dérivé de la guanidine, nitro guanidine, nitrate de guanidine ou un autre dérivé de la guanidine.

Selon une possibilité offerte par l'invention, l'additif réducteur sera présent dans le composé secondaire dans une proportion massique comprise entre 20 et 60% de l'ensemble primaire-secondaire.

Selon une autre possibilité offerte par l'invention, l'additif réducteur sera présent dans le composé secondaire dans une proportion massique comprise entre 35 et 50% de l'ensemble primaire-secondaire.

Avantageusement, l'additif réducteur sera du polyester, présent dans le composé secondaire dans une proportion massique inférieure à 15% de l'ensemble primaire-secondaire.

Avantageusement, l'additif réducteur sera de l'acétate d'ammonium, présent dans le composé secondaire dans une proportion massique inférieure à 20% de l'ensemble primaire-secondaire.

Avantageusement, l'additif réducteur sera de l'oxamide et/ou de l'oxamide d'ammonium ou l'un de ses dérivés, présent dans le composé secondaire dans une proportion massique inférieure à 30% de l'ensemble primaire-secondaire.

Avantageusement, l'additif réducteur sera de l'urée ou un dérivé de l'urée, telle que la nitro-urée, présent dans le composé secondaire dans une proportion massique inférieure à 30% de l'ensemble primaire-secondaire.

Avantageusement, l'additif réducteur sera de l'hexogène et/ou de l'octogène, présent dans le composé secondaire dans une proportion massique inférieure à 60% de l'ensemble primaire-secondaire.

Avantageusement, l'additif réducteur sera de l'aminotétrazole, dans une proportion massique inférieure à 70% de l'ensemble primaire-secondaire.

Avantageusement, le propergol sera présent dans le composé primaire dans une proportion massique inférieure à 40% de l'ensemble primaire-secondaire.

Avantageusement, le propergol sera présent dans le composé primaire dans une proportion massique inférieure à 20% de l'ensemble primaire-secondaire.

Selon une possibilité offerte par l'invention, le propergol sera présent dans le composé primaire dans une proportion massique inférieure à 10% de l'ensemble primaire-secondaire.

Avantageusement, le composé secondaire comprendra au moins un catalyseur dans une proportion inférieure à 5% de l'ensemble primaire-secondaire. Le catalyseur pourra être choisi parmi les dérivés de cuivre II (degré d'oxydation), tels que l'oxyde de cuivre ou le phtalocyanate de cuivre, et/ou les dérivés du chrome, chromates et bichromates, et/ou les dérivés du fer, tels que les oxydes de fer et des métaux de la première série de transition.

Selon un aspect particulièrement intéressant de l'invention, l'ensemble primaire-secondaire forme une balance oxygène négative.

Avantageusement, le composé primaire sera un composé présentant une balance oxygène négative ou nulle. Dans ce cas, le(s) composé(s) primaire et/ou secondaire comporte(ront) un apport en oxydant, tels que des perchlorates alcalin alcalino-terreux ou d'ammonium, éventuellement associé avec un nitrate alcalin ou alcalino-terreux.

On doit noter qu'une utilisation particulière du dispositif selon l'invention consiste en la pressurisation d'enceintes ou de vérins.

On comprendra mieux l'invention à l'aide de la description, faite ci-après à titre purement explicatif, de plusieurs exemples de réalisation de l'invention.

Les méthodes de mise en oeuvre et le dispositif de mise en oeuvre d'un élément de sécurité sont identiques à ce qui est décrit dans la demande de brevet WO 0189885 et ne seront pas décrites plus avant ici. Les différences avec cette demande de brevet et la présente demande résident dans la composition particulière utilisée dans le présent dispositif selon l'invention.

### Exemple 1 :

Le primaire consiste en 4 g de propergol double base 1152 (nitrocellulose/nitroglycérine) et le secondaire consiste en 16 g d'un mélange nitrate d'ammonium 60%, nitro guanidine 40%, en vrac.

Les résultats pour ce chargement dans l'élément de sécurité sont les suivants :
- pression maximum dans une enceinte fermée de 60 L remplie d'azote sous un bar : 3,5 bars relatifs à 30 ms,
- taux de monoxyde de carbone : 2% soit 500 PPM (Partie Par Million) après dilution dans un volume de 2 500 L, Taux d'oxydes d'azote 0,15% soit sensiblement 40 PPM après dilution dans un volume de 2 500 L. On notera par ailleurs que ces résultats sont sensiblement les mêmes lorsque le tir est effectué dans un sac de contenance de 90 litres tiré dans un tank de 2500 litres, soit 30 PPM de NOx et 550 PPM de monoxyde de carbone.

La pression dans la Chambre du composé primaire est 200 bars, tandis que la pression efficace dans la chambre du composé secondaire est 50 bars.

### Exemple 1 bis:

Accroissement du ratio NA/SD :
Le primaire consiste en 4 g de propergol double base 1152 (nitrocellulose/nitroglycérine) et le secondaire consiste en 24 g d'un mélange nitrate d'ammonium 60%, nitro guanidine 40%, en vrac.

Les résultats pour ce chargement dans l'élément de sécurité sont les suivants :
- pression maximum dans une enceinte fermée de 60 L remplie d'azote sous un bar : 5,4 bars relatifs à 30 ms,
- Les taux de monoxyde de carbone et d'oxydes d'azote sont sensiblement analogues au cas précédent

### Exemple 1 ter :

Influence de la quantité de matière et de la durée de fonctionnement pour des applications de durée de l'ordre de 0,5 seconde :
Le primaire consiste en 12g de propergol double base 1131 (nitrocellulose/nitroglycérine) et le secondaire consiste en 48 g d'un mélange nitrate d'ammonium 60%, nitro guanidine 40%, en vrac.

Les résultats pour ce chargement de l'élément de sécurité sont les suivants :
- pression maximum dans une enceinte fermée de 60 L remplie d'azote sous un bar : 6,2 bars relatifs à 400ms,
- taux de monoxyde de carbone : 4,5% et Taux d'oxydes d'azote 0,2%
La pression dans la Chambre du composé primaire est inférieure à 100 bars, tandis que la pression efficace dans la chambre du composé secondaire est inférieure à 50 bars.

### Exemple 2 :

Cet exemple sert à illustrer en particulier l'efficacité de l'oxyde de Fer comme catalyseur de réduction des oxydes d'azote:
Le composé primaire consiste en 4 g de propergol double base 1152 (nitrocellulose/nitroglycérine) tandis que le composé secondaire consiste en 16 g d'un mélange pastillé de nitrate d'ammonium 70 %, nitro guanidine 30%.
Les résultats sont les suivants :
   - l'adjonction de 1,5% d'oxyde de Fer a permis de réduire de plus de 50% le taux de NOx (dioxyde d'azote) mesuré dans un volume de 2 5001,
   - le taux de monoxyde de carbone n'augmente que de 10% à 400 PPM dans ces mêmes conditions.
La pression de la chambre du composé primaire vaut 200 bars, tandis que la pression efficace de la chambre du composé secondaire nitrate est 50 bars.

### Exemple 3 :

Ce troisième exemple sert à marquer l'influence de la pression dans la chambre de post combustion sur le taux de NOx :

Le composé primaire consiste en 4 g de propergol double base 1152 (nitrocellulose/nitroglycérine) tandis que le composé secondaire consiste en 16 g d'un mélange pulvérulent de nitrate d'ammonium 60%, nitro guanidine 40%.

Les résultats pour ce chargement identique à l'exemple 1 sont les suivants :
- pression maximum dans une enceinte fermée de 60 L remplie d'azote sous un bar : 3,5 bars relatifs à 30 ms,
- taux de monoxyde de carbone : 2% soit 500 PPM après dilution dans un volume de 2 500 L, Taux d'oxydes d'azote 0,10% soit 25 PPM (Partie Par Million) après dilution dans un volume de 2 500 L (litres).

La pression dans la Chambre du composé primaire est 200 bars, tandis que la pression dans la chambre du composé secondaire nitrate est 120 bars.

### Exemple 4 :

Cet exemple sert à apprécier l'intérêt de l'adjonction d'un oxydant :

Le composé primaire consiste en 4 g de propergol double base 1152 (nitrocellulose/nitroglycérine) tandis que le composé secondaire consiste en 16 g d'un mélange pulvérulent de nitrate d'ammonium 55%, nitro guanidine 40%, 3% de perchlorate de potassium, 1,5% d'oxyde de Fer.

Les résultats pour ce chargement sont les suivants :
- pression maximum dans une enceinte fermée de 60 L remplie d'azote sous un bar : 3,5 bars relatifs,
- taux de monoxyde de carbone : 1% soit 250 PPM après dilution dans un volume de 2 500 L, Taux d'oxydes d'azote 0,20% soit 50 PPM après dilution dans un volume de 2 500 L.

La pression dans la Chambre du composé primaire est 200 bars, tandis que la chambre du composé secondaire nitrate est 120 bars.

## Revendications

1. Dispositif comportant un système de génération de gaz en particulier pour la mise en oeuvre d'un élément de sécurité pour la protection des biens et/ou des personnes, notamment pour la protection d'au moins un occupant d'un véhicule, le système de génération de gaz raccordé audit élément de sécurité, par exemple à un coussin gonflable, et comportant une charge explosible formée au moins par un composé pyrotechnique primaire disposé dans une première chambre, initié par au moins un initiateur muni d'une charge renforçatrice et un composé secondaire disposé dans une chambre secondaire dont la décomposition est pilotée par le composé primaire, le composé primaire comportant au moins un propergol, par exemple un propergol double base ou ceux du type à base de nitrocellulose, les nitramites, de type lova ou tous ceux utilisés classiquement pour les coussins gonflables de sécurité dont la balance oxygène a été éventuellement ajustée, et permet au moins une interaction des produits de combustion des composés primaire(s) et secondaire(s) dans au moins un volume d'interaction non confiné ou faiblement confiné, **caractérisé en ce que** le composé secondaire, dans ladite chambre secondaire, comprend un composant oxydant apte, par décomposition, à délivrer uniquement du gaz, au moins un additif réducteur présentant une fonction d'apport en azote, ledit additif étant présent dans une proportion massique inférieure à 70% de la masse de l'ensemble primaire-secondaire.

2. Dispositif selon la revendication 1, **caractérisé en ce que** les susdits composés primaire et secondaire se présentent sous forme solide.

3. Dispositif selon la revendication 1 ou la revendication 2, **caractérisé en ce que** ladite chambre secondaire présente une pression efficace inférieure à 50 bars lors de la combustion du composé secondaire ; ladite pression étant obtenue par ajustement du diamètre d'une tuyère du dispositif.

4. Dispositif selon la revendication 1 ou la revendication 2, **caractérisé en ce que** ladite chambre secondaire présente une pression d'au moins 50 bars lors de la combustion du composé secondaire ; ladite pression étant obtenue par ajustement du diamètre de la chambre secondaire.

5. Dispositif selon la revendication 1 ou 2, **caractérisé en ce que** le composé secondaire, placé dans la chambre secondaire, présente une pression inférieure ou égale à la pression de combustion du propergol ; ladite pression étant obtenue par ajustement du diamètre de la chambre secondaire.

6. Dispositif selon la revendication 1, **caractérisé en ce que** l'additif réducteur est un dérivé de la guanidine, nitro guanidine, nitrate de guanidine ou un autre dérivé de la guanidine.

7. Dispositif selon la revendication 6, **caractérisé en ce que** l'additif réducteur est présent dans le composé secondaire dans une proportion massique comprise entre 20 et 60% de l'ensemble primaire-secondaire.

8. Dispositif selon la revendication 6 ou 7, **caractérisé en ce que** l'additif réducteur est présent dans le composé secondaire dans une proportion massique comprise entre 35 et 50% de l'ensemble primaire-secondaire.

9. Dispositif selon la revendication 1, **caractérisé en ce que** l'additif réducteur est du polyester, présent dans le composé secondaire dans une proportion massique inférieure à 15% de l'ensemble primaire-secondaire.

10. Dispositif selon la revendication 1, **caractérisé en ce que** l'additif réducteur est de l'acétate d'ammonium, présent dans le composé secondaire dans une proportion massique inférieure à 20% de l'ensemble primaire-secondaire.

11. Dispositif selon la revendication 1, **caractérisé en ce que** l'additif réducteur est de l'oxamide et/ou de l'oxamide d'ammonium ou l'un de ses dérivés, présent dans le composé secondaire dans une proportion massique inférieure à 30% de l'ensemble primaire-secondaire.

12. Dispositif selon la revendication 1, **caractérisé en ce que** l'additif réducteur est de l'urée ou un dérivé de l'urée, telle que la nitro-urée, présent dans le composé secondaire dans une proportion massique inférieure à 30% de l'ensemble primaire-secondaire.

13. Dispositif selon la revendication 1, **caractérisé en ce que** l'additif réducteur est de l'hexogène et/ou de l'octogène, présent dans le composé secondaire dans une proportion massique inférieure à 60% de l'ensemble primaire-secondaire.

14. Dispositif selon la revendication 1, **caractérisé en ce que** l'additif réducteur est de l'aminotétrazole, dans une proportion massique inférieure à 70% de l'ensemble primaire-secondaire.

15. Dispositif selon la revendication 1, **caractérisé en ce que** le propergol est présent dans le composé primaire dans une proportion massique inférieure à 40% de l'ensemble primaire-secondaire.

16. Dispositif selon la revendication 1, **caractérisé en ce que** le propergol est présent dans le composé primaire dans une proportion massique inférieure à 20% de l'ensemble primaire-secondaire.

17. Dispositif selon la revendication 1, **caractérisé en ce que** le propergol est présent dans le composé primaire dans une proportion massique inférieure à 10% de l'ensemble primaire-secondaire.

18. Dispositif selon la revendication 17, **caractérisé en ce que** le composé secondaire comprend au moins un catalyseur dans une proportion inférieure à 5% de l'ensemble primaire-secondaire.

19. Dispositif selon la revendication 18, **caractérisé en ce que** le catalyseur est choisi parmi les dérivés de cuivre II (degré d'oxydation), tels que l'oxyde de cuivre ou le phtalocyanate de cuivre, et/ou les dérivés du chrome, chromates et bichromates, et/ou les dérivés du fer, tels que les oxydes de fer et des métaux de la première série de transition.

20. Dispositif selon la revendication 1, **caractérisé en ce que** l'ensemble primaire-secondaire forme une balance oxygène négative.

21. Dispositif selon la revendication 1, **caractérisé en ce que** le composé primaire est un composé présentant une balance oxygène négative ou nulle.

22. Dispositif selon la revendication 21, **caractérisé en ce que** le(s) composé(s) primaire et/ou secondaire comporte(nt) un apport en oxydant, tels que des perchlorates alcalin alcalino-terreux ou d'ammonium, éventuellement associés à un nitrate alcalin ou alcalino-terreux.

23. Dispositif selon la revendication 2, **caractérisé en ce que** lesdits composés primaire et secondaire forment une charge explosible monolithe homogène.

24. Dispositif selon la revendication 2, **caractérisé en ce que** lesdits composés primaire et secondaire forment une charge explosible monolithe hétérogène et **en ce que** lesdits composés primaire et secondaire se présentent en vrac, pastillé ou non, ou sous la forme d'au moins une feuille, plate ou enroulée, ou d'au moins un brin.

25. Utilisation du dispositif selon l'une des revendications 1 à 24 pour la pressurisation d'enceintes ou de vérins.

## Claims

1. Device comprising a system for the generation of gas in particular for implementing a security element for the protection of goods and/or people, mainly for the protection of at least one occupant of a vehicle, the gas-generation system being connected to said security element, for example to an inflatable cushion, and comprising an explosive charge formed by at least one primary pyrotechnical compound arranged in a first chamber, initiated by at least one initiator having a reinforcing agent and a secondary compound arranged in a secondary chamber, the decomposition of which is controlled by the first compound comprising at least one propellant, for example a double-base propellant or a nitrocellulose-based propellant, of the lova type or any of those conventionally used for inflatable safety cushions in which the oxygen balance has optionally been adjusted and allows at least one interaction of the products of combustion of the primary and secondary compounds in at least one unconfined or slightly confined interaction volume, **characterised in that** the secondary compound in said secondary chamber includes an oxidising compound capable, by decomposition, of supplying only gas, at least one reducing additive having a nitrogen contributing effect, said additive being present in a proportion by weight of less than 70% of the weight of the primary-secondary combination.

2. Device according to claim 1, **characterised in that** the aforementioned primary and secondary compounds are presented in solid form.

3. Device according to claim 1 or claim 2, **characterised in that** said secondary chamber has an effective pressure of less than 50 bars during combustion of the secondary compound, said pressure being obtained by adjusting the diameter of a nozzle of the device.

4. Device according to claim 1 or claim 2, **characterised in that** said secondary chamber has a pressure of at least 50 bars during combustion of the secondary compound, said pressure being obtained by adjusting the diameter of the secondary chamber.

5. Device according to claim 1 or 2, **characterised in that** the secondary compound, placed in the secondary chamber, has a pressure lower than or equal to the combustion pressure of the propellant, said pressure being obtained by adjusting the diameter of the secondary chamber.

6. Device according to claim 1, **characterised in that** the reducing additive is a derivative of guanidine, nitro guanidine, guanidine nitrate or another guanidine derivative.

7. Device according to claim 6, **characterised in that** the reducing additive is present in the secondary compound in a proportion by weight of between 20% and 60% of the primary-secondary combination.

8. Device according to claim 6 or 7, **characterised in that** the reducing additive is present in the secondary compound in a proportion by weight of between 35% and 50% of the primary-secondary combination.

9. Device according to claim 1, **characterised in that** the reducing additive is polyester, present in the secondary compound in a proportion by weight of less than 15% of the primary-secondary combination.

10. Device according to claim 1, **characterised in that** the reducing additive is ammonia acetate, present in the secondary compound in a proportion by weight of less than 20% of the primary-secondary combination.

11. Device according to claim 1, **characterised in that** the reducing additive is oxamide and/or ammonium oxamide or one of its derivatives, present in the secondary compound in a proportion by weight of less than 30% of the primary-secondary combination.

12. Device according to claim 1, **characterised in that** the reducing additive is urea or a urea derivative, such as nitrourea, present in the secondary compound in a proportion by weight of less than 30% of the primary-secondary combination.

13. Device according to claim 1, **characterised in that** the reducing additive is hexogen and/or octogen, present in the secondary compound in a proportion by weight of less than 60% of the primary-secondary combination.

14. Device according to claim 1, **characterised in that** the reducing additive is aminotetrazole, in a proportion by weight of less than 70% of the primary-secondary combination.

15. Device according to claim 1, **characterised in that** the propellant is present in the primary compound in a proportion by weight of less than 40% of the primary-secondary combination.

16. Device according to claim 1, **characterised in that** the propellant is present in the primary compound in a proportion by weight of less than 20% of the primary-secondary combination.

17. Device according to claim 1, **characterised in that** the propellant is present in the primary compound in a proportion by weight of less than 10% of the primary-secondary combination.

18. Device according to claim 17, **characterised in that** the secondary compound comprises at least one catalyst in a proportion of less than 5% of the primary-secondary combination.

19. Device according to claim 18, **characterised in that** the catalyst is chosen from among the derivatives of copper II (degree of oxidation), such as copper oxide or copper phtalocyanate, and/or chromium derivatives, chromates and bichromates, and/or iron derivatives, such as iron oxides and metals of the first transition series.

20. Device according to claim 1, **characterised in that** the primary-secondary combination forms a negative oxygen balance.

21. Device according to claim 1, **characterised in that** the primary compound is a compound having negative or zero oxygen balance

22. Device according to claim 21, **characterised in that** the primary and/or secondary compound(s) comprise(s) a supply of oxidisers such as alkali, alkaline-earth or ammonium perchlorates, optionally associated with an alkali or alkaline-earth nitrate.

23. Device according to claim 2, **characterised in that** said primary and secondary compounds form a homogeneous monolithic explosive charge.

24. Device according to claim 2, **characterised in that** said primary and secondary compounds form a heterogeneous monolithic explosive charge and **in that** said primary and secondary compounds are supplied in bulk, pelleted or not, or in the form of at least one sheet, flat or rolled, or at least one strand.

25. Use of the device according to at least one of the claims from 1 to 24 for pressurising enclosures or cylinders.

## Patentansprüche

1. Vorrichtung mit einem System für die Gaserzeugung, insbesondere für den Einsatz eines Sicherheitselements für den Schutz von Gütern und/oder Personen, insbesondere für den Schutz von mindestens einem der Insassen eines Fahrzeugs, das an das besagte Sicherheitselement angeschlossene System für die Gaserzeugung, zum Beispiel an ein aufblasbares Kissen, und das eine explosionsgefährdete Ladung enthält, die mindestens von einer pyrotechnischen Primärverbindung gebildet wird, die in einer ersten Kammer angeordnet ist, die von mindestens einem kapazitiven Schalter initiiert wird, der mit einer Verstärkungsladung versehen ist, und eine in einer Sekundärkammer angeordnete Sekundärverbindung, deren Zersetzung von der Primärverbindung gesteuert wird, wobei die Primärverbindung mindestens ein Propergol umfaßt, zum Beispiel ein doppelbasiges Propergol, oder diejenigen von der Art mit Nitrozellulosebasis, die Nitramiten, von der Art Lova oder alle diejenigen, die herkömmlicherweise für die aufblasbaren Sicherheitskissen verwendet werden, deren Gleichgewicht an Sauerstoff eventuell angepaßt wurde und mindestens eine Interaktion der Verbrennungsprodukte der Primär- und Sekundärverbindungen in mindestens einem nicht umschlossenen oder gering umschlossenen Interaktionsvolumen ermöglicht, **dadurch gekennzeichnet, daß** die Sekundärverbindung in der besagten Sekundärkammer eine Oxidationskomponente umfaßt, die durch Zerlegung geeignet ist, nur Gas abzugeben, mindestens einen Reduktionszusatzstoff, der eine Stickstoffzuführung aufweist, wobei der besagte Zusatzstoff in einem geringeren Massenanteil von unter 70% der Masse der Primär-/Sekundärbaugruppe vorhanden ist.

2. Vorrichtung nach Anspruch 1, **dadurch gekennzeichnet, daß** die oben angeführten Primär- und Sekundärverbindungen in fester Form auftreten.

3. Vorrichtung nach Anspruch 1 oder Anspruch 2, **dadurch gekennzeichnet, daß** die besagte Sekundärkammer bei der Verbrennung der Sekundärverbindung einen Druck von unter 50 Bar aufweist; wobei der besagte Druck durch die Anpassung des Querschnitts einer Düse der Vorrichtung erzielt wird.

4. Vorrichtung nach Anspruch 1 oder Anspruch 2, **dadurch gekennzeichnet, daß** die besagte Sekundärkammer bei der Verbrennung der Sekundärverbindung einen Druck von mindestens 50 Bar aufweist; wobei der besagte Druck durch die Anpassung des Querschnitts der Sekundärkammer erzielt wird.

5. Vorrichtung nach Anspruch 1 oder 2, **dadurch gekennzeichnet, daß** die in der Sekundärkammer plazierte Sekundärverbindung einen Druck von unter oder gleich dem Druck bei Verbrennung des Propergols aufweist; wobei der besagte Druck durch die Anpassung des Querschnitts der Sekundärkammer erzielt wird.

6. Vorrichtung nach Anspruch 1, **dadurch gekennzeichnet, daß** der Reduktionszusatzstoff ein Derivat des Guanidins ist, Nitroguanidin, Guanidinnitrat oder ein anderes Derivat des Guanidins.

7. Vorrichtung nach Anspruch 6, **dadurch gekennzeichnet, daß** der Reduktionszusatzstoff in der Sekundärverbindung mit einem Massenanteil von zwischen 20 und 60% des gesamten Primär-/Sekundärstoffs vorhanden ist.

8. Vorrichtung nach Anspruch 6 oder 7, **dadurch gekennzeichnet, daß** der Reduktionszusatzstoff in der Sekundärverbindung mit einem Massenanteil von zwischen 35 und 50% des gesamten Primär-/Sekundärstoffs vorhanden ist.

9. Vorrichtung nach Anspruch 1, **dadurch gekennzeichnet, daß** der Reduktionszusatzstoff Polyester ist und in der Sekundärverbindung mit einem Massenanteil von unter 15% des gesamten Primär-/Sekundärstoffs vorhanden ist.

10. Vorrichtung nach Anspruch 1, **dadurch gekennzeichnet, daß** der Reduktionszusatzstoff Ammoniumacetat ist und in der Sekundärverbindung mit einem Massenanteil von unter 20% des gesamten Primär-/Sekundärstoffs vorhanden ist.

11. Vorrichtung nach Anspruch 1, **dadurch gekennzeichnet, daß** der Reduktionszusatzstoff Oxamid und/oder Ammoniumoxamid oder eines seiner Derivate ist und in der Sekundärverbindung mit einem Massenanteil von unter 30% des gesamten Primär-/Sekundärstoffs vorhanden ist.

12. Vorrichtung nach Anspruch 1, **dadurch gekennzeichnet, daß** der Reduktionszusatzstoff Harnstoff oder ein Derivat des Harnstoffs, wie zum Beispiel Nitroharnstoff, ist und in der Sekundärverbindung mit einem Massenanteil von unter 30% des gesamten Primär-/Sekundärstoffs vorhanden ist.

13. Vorrichtung nach Anspruch 1, **dadurch gekennzeichnet, daß** der Reduktionszusatzstoff Hexogen und/oder Oktogen ist und in der Sekundärverbindung mit einem Massenanteil von unter 60% des gesamten Primär-/Sekundärstoffs vorhanden ist.

14. Vorrichtung nach Anspruch 1, **dadurch gekennzeichnet, daß** der Reduktionszusatzstoff Aminotetrazol mit einem Massenanteil von unter 70% des gesamten Primär-/Sekundärstoffs ist.

15. Vorrichtung nach Anspruch 1, **dadurch gekennzeichnet, daß** das Propergol in der Primärverbindung mit einem Massenanteil von unter 40% des gesamten Primär-/Sekundärstoffs vorhanden ist.

16. Vorrichtung nach Anspruch 1, **dadurch gekennzeichnet, daß** das Propergol in der Primärverbindung mit einem Massenanteil von unter 20% des gesamten Primär-/Sekundärstoffs vorhanden ist.

17. Vorrichtung nach Anspruch 1, **dadurch gekennzeichnet, daß** das Propergol in der Primärverbindung mit einem Massenanteil von unter 10% des gesamten Primär-/Sekundärstoffs vorhanden ist.

18. Vorrichtung nach Anspruch 17, **dadurch gekennzeichnet, daß** die Sekundärverbindung mindestens einen Katalysator mit einem Anteil von unter 5% des gesamten Primär-/Sekundärstoffs vorhanden ist.

19. Vorrichtung nach Anspruch 18, **dadurch gekennzeichnet, daß** der Katalysator unter den Derivaten von Kupfer II (Oxidationsgrad) gewählt wird, wie zum Beispiel Kupferoxid oder Kupferphtalocyanat und/oder die Derivate von Chrom, Chromate und Bichromate, und/oder die Derivate von Eisen, wie zum Beispiel die Eisenoxide und die Metalle der ersten Übergangsreihe.

20. Vorrichtung nach Anspruch 1, **dadurch gekennzeichnet, daß** der gesamte Primär-/Sekundärstoff ein negatives Sauerstoffgleichgewicht bildet.

21. Vorrichtung nach Anspruch 1, **dadurch gekennzeichnet, daß** die Primärverbindung eine Verbindung ist, die ein negatives oder null Sauerstoffgleichgewicht aufweist.

22. Vorrichtung nach Anspruch 21, **dadurch gekennzeichnet, daß** die Primär- und/oder Sekundärverbindung(en) einen Zuschlag von Oxidationsmitteln umfaßt, wie zum Beispiel alkalische Perchlorate, alkalin-erdige oder von Ammonium umfassen, die eventuell mit einem alkalischen oder einem alkalin-erdigen Nitrat verbunden sind.

23. Vorrichtung nach Anspruch 2, **dadurch gekennzeichnet, daß** die besagten Primär- und Sekundärverbindungen eine homogene monolithische explosionsgefährdete Ladung bilden.

24. Vorrichtung nach Anspruch 2, **dadurch gekennzeichnet, daß** die besagten Primär- und Sekundärverbindungen eine heterogene monolithische explosionsgefährdete Ladung bilden, daß die besagten Primär- und Sekundärverbindungen in loser Form, als Tabletten oder nicht oder in Form von mindestens einem flachliegenden oder aufgerollten Blatt oder mindestens einem Faden auftreten.

25. Benutzung der Vorrichtung nach einem beliebigen der vorstehenden Ansprüche 1 bis 24 für die Druckbeaufschlagung von Räumen oder Arbeitszylindern.
